# EUROPÄISCHE PATENTSCHRIFT

(11) **EP 3 479 677 B1**
(45) Veröffentlichungstag und Bekanntmachung des Hinweises auf die Patenterteilung: **01.01.2020**
(21) Anmeldenummer: 17001802.2
(22) Anmeldetag: 06.11.2017
(51) Int. Cl.: A01F 29/06, A01F 29/09, A01F 29/16, A01D 34/62, A01D 43/08

(54) **LANDWIRTSCHAFTLICHE ARBEITSVORRICHTUNG**
AGRICULTURAL WORKING DEVICE
DISPOSITIF DE TRAVAIL AGRICOLE

(43) Veröffentlichungstag der Anmeldung: 08.05.2019
(73) Patentinhaber: Müthing GmbH & Co. KG, 59955 Winterberg (DE)
(72) Erfinder: Müthing, Michael, D-59955 Winterberg (DE); Martin, Arnold, D-38275 Steinlah (DE)
(74) Vertreter: Lichti - Patentanwälte Partnerschaft mbB

(56) Entgegenhaltungen:
- EP-A1- 0 734 646
- EP-A1- 1 839 477
- EP-A2- 2 764 767
- WO-A1-82/01299
- DE-A1-102009 046 821
- US-A1- 2005 218 254
- US-B2- 7 874 504

## Beschreibung

Die Erfindung betrifft eine landwirtschaftliche Arbeitsvorrichtung zum Bearbeiten von Biomasse nach dem Oberbegriff des Anspruchs 1 sowie ein Verfahren zum Einstellen der Position einer Schneidschiene eines Mulchers relativ von einem Arbeitsrotor des Mulchers nach dem Oberbegriff des Anspruchs 9.

Derartige landwirtschaftliche Arbeitsvorrichtungen zum Abtrennen und Zerkleinern von Bodenbewuchs, wie Gras, aber auch Pflanzenstoppeln, finden als Abtrenn- und Zerkleinerungsvorrichtungen, insbesondere als Mulch-, Mulch-Mäh-Vorrichtungen oder Bodenfräsen breite Anwendung unter anderem in der Brachflächen- und Landschaftspflege sowie der Landwirtschaft. Sie werden dort eingesetzt zum Mähen und Zerkleinern von Pflanzenaufwuchs, Pflanzenresten und Biomasse verschiedenster Art, wie beispielsweise Gras, Zwischenfrüchten, Pflanzenstoppeln von Getreide, Raps, Mais, Ästen oder Büschen. Dieses wird von den Arbeitsvorrichtungen vom Boden abgetrennt, aufgenommen, durch einen Arbeitsrotor der Arbeitsvorrichtung zerkleinert und wieder auf den Boden zurückgeführt. Das zerteilte und verteilte Pflanzenmaterial auf dem Boden verrottet auf dem Boden schnell aufgrund seiner Beschaffenheit. Es dient damit auch als Dünger für den Boden, zur Humusbildung und für Feldhygienemaßnahmen.

Derartige Arbeitsvorrichtungen können neben dem Arbeitsrotor eine Schneideinheit mit mindestens einer Schneidschiene aufweisen, die beabstandet zum Arbeitsrotor innerhalb des Gehäuses der Arbeitsvorrichtung angeordnet ist. Der Abstand zwischen der Schneidschiene und dem Arbeitsrotor bildet einen Spalt aus, der in erster Linie die Größe des zerkleinerten Bewuchse bestimmt. Bei den meisten Arbeitsvorrichtungen aus dem Stand der Technik ist die Schneidschiene samt Schneideinrichtung örtlich fest innerhalb des Gehäuses der Arbeitsvorrichtung angeordnet. Eine Anpassung an verschiedene Schnittlängen ist daher nicht möglich.

Bekannt sind einzelne Arbeitsvorrichtungen der genannten Art, bei denen die Schneideinrichtung beziehungsweise die Schneidschiene manuell vom Benutzer verstellt werden kann. Hierzu werden zunächst Befestigungselemente gelöst, die die Schneideinrichtung an dem Gehäuse der Arbeitsvorrichtung halten. Anschließend wird die Schneideinrichtung beziehungsweise die Schneidschiene versetzt und wieder mittels der Befestigungselemente am Gehäuse der Vorrichtung angebracht. Dieser Prozess ist bei sich häufig wechselnden Umständen, beispielsweise bei Gut- oder Biomasse und Wetteränderungen, sehr mühsam und erlaubt keine dynamische Anpassung der Schneideinrichtung während des Betriebs der Vorrichtung. Außerdem ist der Platz im Innenraum des Gehäuses derart stark begrenzt, dass einzelne, im Arbeitsweg des zu zerkleinernden Bodenwuchses angeordnete Komponenten den Arbeitsfluss wesentlich stören.

Die europäische Patentanmeldung 17001686.9 offenbart eine landwirtschaftliche Arbeitsvorrichtung zum Bearbeiten von Biomasse, wie Pflanzenteilen, insbesondere Mulch-, Mulch-Mäh- oder Fräsvorrichtung mit mindestens einer Schneideinrichtung, die mindestens eine Schneidschiene aufweist, wobei zur Erzielung einer kontinuierlichen Verstellbarkeit der Schneideinrichtung während des Arbeitsprozesses von einem Benutzer vorgesehen ist, dass die Schneidschiene vom Benutzer mittels eines fernbedienbaren Hydraulikzylinders verstellbar ist. Einerseits ist die Aufmerksamkeit des Benutzers in anderer Weise gefordert, so dass er nicht immer den Mulchvorgang überwachen und seinerseits notwendige Einstellungen oder Verstellungen vornehmen kann, andererseits wird der Mulchvorgang durch äußere Einflüsse, wie beispielsweise die Veränderung der Qualität des Mulchguts, insbesondere der Änderung seiner Feuchtigkeit beeinträchtigt. Dokument EP0734646A1 offenbart ein Verfahren nach dem Oberbegriff des Anspruchs 9.

Der Erfindung liegt daher die Aufgabe zugrunde, eine gattungsgemäße Vorrichtung und ein Verfahren dahingehend weiterzubilden, dass vorstehend genannten Anforderungen Genüge getan werden kann.

Erfindungsgemäß wird die genannte Aufgabe mit einer gattungsgemäßen Vorrichtung gelöst, die kennzeichnende Merkmale des Anspruchs 1 aufweist. Schließlich wird die genannte Aufgabe mit einem gattungsgemäßen Verfahren gelöst, das die kennzeichnenden Merkmale des Anspruchs 9 aufweist.

Durch die erfindungsgemäße Lösung können die Betriebszustände an die gegebenen Arbeitsbedingungen angepasst bzw. gemäß diesen geregelt werden. Als Stellglieder kommen insbesondere fernbedienbare Hydraulikzylinder, pneumatische Verstellungen und elektrische Stellmotoren infrage. Die Drehzahl der Antriebswelle kann die einer Systemwelle, wie die der Zapfwelle eines Trägerfahrzeugs (Traktors), eines pneumatischen Antriebs oder eines elektrischen Antriebsmotors sein.

Eine bevorzugte Weiterbildung der erfindungsgemäßen Vorrichtung ist gekennzeichnet durch einen Positionssensor zur Bestimmung der Position der Schneidschiene und/oder der Schneidkante.

Durch die Ausgestaltung wird der Schlupf zwischen Antriebswelle und Rotorwelle überwacht und, wenn dieser zu groß ist, weil die Belastung des Rotors mit Biomasse oder Mulchgut zu stark ist, eine Regelung zur Entlastung dahingehend vorgenommen, dass die Spaltbreite vergrößert wird, wodurch der Schlupf reduziert wird. Es liegt andererseits der Schlupf unter einem vorgegebenen Wert, so kann die Effektivität, dadurch erhöht werden, dass die Spaltbreite verringert wird und damit eine effektivere Zerkleinerung der Biomasse und damit ein effektiveres Mulchen erzielt wird. Hierdurch wird insbesondere auch erreicht, dass die Vorrichtung in einem günstigen Drehzahlbereich und damit beispielsweise schwingungsarm betrieben werden kann.

Andere bevorzugte Weiterbildungen der Erfindung sind gekennzeichnet durch einen Drehmomentsensor zur Bestimmung des an einer der Wellen angreifenden Drehmoments und Auslegung der Steuereinrichtung zur Einstellung der Position der Schneidkante zur Vermeidung einer Überlast und/oder durch einen Kraftsensor zwischen gelenkig miteinander verbundenen Tragteilen von Antriebswelle und Rotor zur Bestimmung des Leistungsbedarfs des Mulchers in Verbindung mit dem Signal eines der Drehzahlsensoren und durch Auslegung der Steuereinrichtung zur Einstellung der Position der Schneidkante zur Vermeidung einer Überlast. Durch solche Leistungsregelungen wird die zur Verfügung stehende Leistung angepasst. Gegebenenfalls kann eine verbrauchsgünstige Arbeitsweise erfolgen oder aber die maximal zur Verfügung stehende Leistung genutzt werden. Auch kann bei plötzlich auftretenden Fehlfunktionen der Schneidspalt schnell geöffnet werden, um Folgeschäden zu vermeiden.

Darüber hinaus können Drucksensoren zur Messung der Drücke in einem die Schneidschiene bewegenden Zylinder beidseits einer Kolbenfläche des Kolbens des Zylinders vorgesehen sein, wobei die Drucksensoren über Signalleitungen mit der Steuereinrichtung verbunden sind.

Darüber hinaus sieht die Erfindung in bevorzugter Weiterbildung vor, dass das Stellglied, insbesondere ein Vier-Drei-Wege-Ventil, durch das die elektronische Steuereinrichtung angesteuert ist zur Beaufschlagung eines Zylinders zur Einstellung der Position der Schneidschiene ausgebildet ist, wobei ein mit der Steuereinrichtung bidirektional verbundenes Bediengerät zur Bedienung der Steuereinrichtung und Anzeige der durch diese geregelten Parameter vorgesehen ist. Als Verbindung kann der ISO-BUS dienen und die Bedienung über diesen erfolgen.

Schließlich ist eine Weiterbildung ausgestaltet durch einen Grün-Sensor (Green-Sensor) zur Bestimmung des Grünungsgrads der zu mulchenden Biomasse und durch Auslegung der Steuereinrichtung zur Einstellung der Position der Schneidkante in Abhängigkeit des Grünungsgrads und gegebenenfalls der Anfallsmenge der Biomasse.

Weiterbildungen des erfindungsgemäßen Verfahrens sehen vor, dass bei Unterschreiten des Verhältnisses der Drehzahl des Arbeitsrotors zur Drehzahl der Antriebswelle gegenüber einem vorgegebenen Wert der Schneidspalt um einen vorgegebenen Wert vergrößert wird oder dass beim Überschreiten des Verhältnisses der Drehzahlen des Arbeitsrotors und der Antriebswelle über einen vorgegebenen Wert der Schneidspalt um einen vorgegebenen Wert reduziert wird und/oder dass die Überprüfung des Schneidspaltes quasi- kontinuierlich vorgenommen wird und bei jeder Überprüfungsphase jeweils einer der vorgenannten Schritte erneut durchgeführt wird. Dabei ist in bevorzugter Ausgestaltung des Verfahrens vorgesehen, dass das Drehmoment an mindestens einer der Wellen gemessen und die Position der Schneidkante zur Begrenzung des Drehmoments und/oder zur Vermeidung einer Überlast eingestellt wird.

Es wird weiterhin die durch eine Getriebeverbindung zwischen den beweglich zueinander gelagerten Wellen gemessen und in Verbindung mit der Messung einer der Drehzahlen der Wellen die Position der Schneidkante zur Vermeidung einer Überlast geregelt und/oder der Grünungsgrad zu mulchender Biomasse gemessen und die Position der Schneidkante aufgrund dieser Messung eingestellt wird.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im Einzelnen erläutert sind. Dabei zeigt:
- Fig. 1: eine erfindungsgemäße landwirtschaftliche Arbeitsvorrichtung in seiner konstruktivmechanischen Ausgestaltung in perspektivischer Darstellung;
- Fig. 2: einen Schnitt der Arbeitsvorrichtung der Fig. 1 senkrecht zur Drehachse seines Rotors;
- Fig. 3: eine schematische Darstellung der Arbeitsvorrichtung der Fig. 1 und 2 mit schematischer Darstellung seines Antriebs und seiner Steuerung einer dem Rotor zugeordneten Gegenschneide;
- Fig. 4: ein Ablaufdiagramm zur Steuerung der Gegenschneide; und
- Fig. 5: eine Blockschaltbilddarstellung eines Systems eines Traktors mit drei an ihm vorgesehenen Arbeitsvorrichtungen.

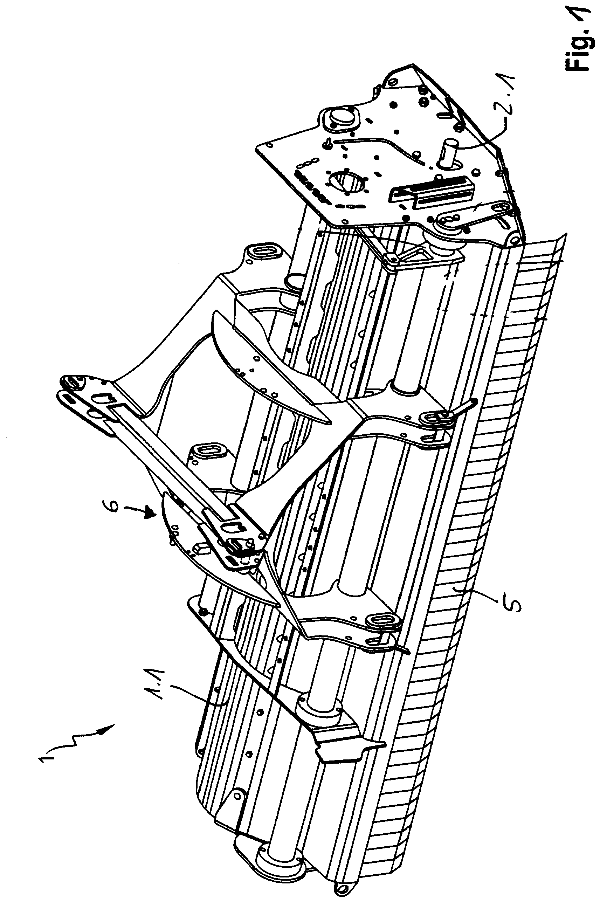

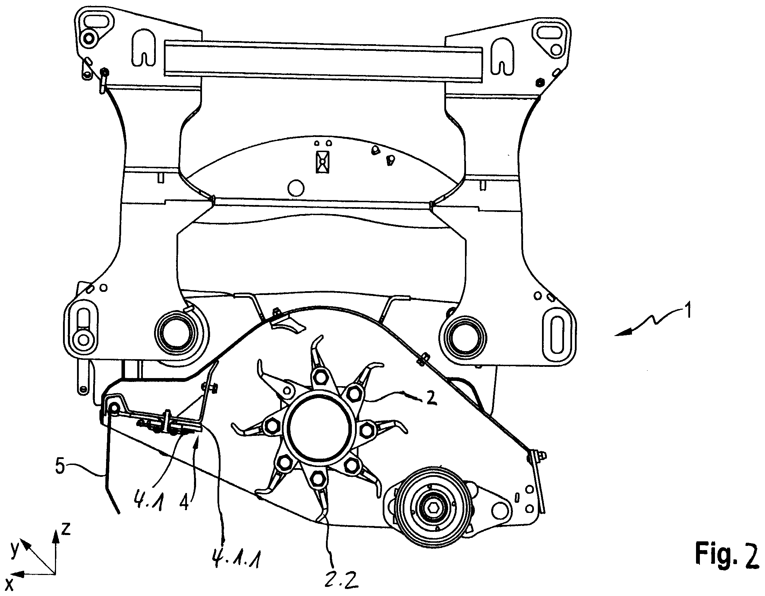

Die Fig. 1 und 2 zeigen, dass eine erfindungsgemäße landwirtschaftliche Arbeitsvorrichtung eines Mulchers 1 ein Mulchergehäuse 1.1 aufweist. Im Mulchergehäuse 1.1 befindet sich ein Arbeitsrotor 2 mit einer Rotorwelle 2.1. Am Arbeitsrotor 2 sind um einen beschränkbaren Winkel verschwenkbare Rotorschlegel 2.2 angeordnet. Dem Arbeitsrotor 2 ist eine Schneideinrichtung 4 mit einer verstellbaren Schneidschiene 4.1 zugeordnet. Durch die Größe des Spaltes zwischen einer Schneidkante 4.1.1 der Schneidschiene 4.1 und dem äußeren Ende der Rotorschlegel 2.2 wird die Länge der einzelnen Fasern des Mulchguts bestimmt. Die Verstellung der Schneidschiene 4.1 erfolgt mittels eines doppelt wirkenden hydraulischen oder pneumatischen Zylinders 4.2 mit einem Kolben 4.3, der vorzugsweise ein Hydraulikzylinder ist. Weiterhin ist in Fahrtrichtung vor dem Arbeitsrotor 2 eine Stützwalze 3 und sind in Fahrtrichtung hinter der Schneideinrichtung 4 schwenkbar gelagerte Schutzbleche 5 vorgesehen. Der Mulcher wird über einen Tragbock 6 an einem Traktor befestigt.

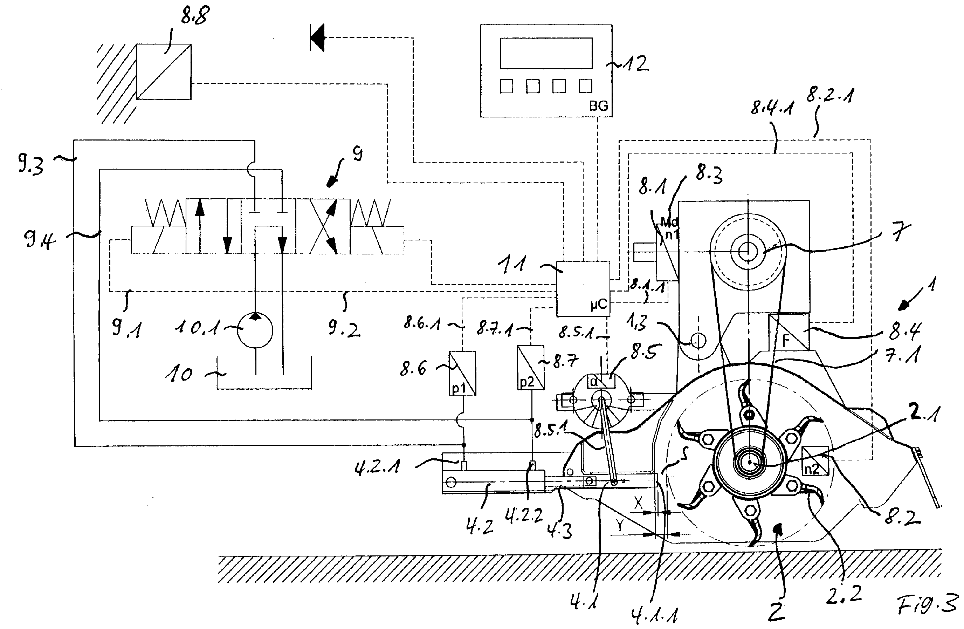

Der Antrieb des Arbeitsrotors 2 erfolgt von einer Zapfwelle eines Traktors her (nicht dargestellt) über eine Antriebswelle 7 des Mulchers 1 und einen von dieser um die Welle 3.1 des Arbeitsrotors 2 geführten Antriebsriemen 7.1 (Fig. 3). Im dargestellten bevorzugten Ausführungsbeispiel weist der Mulcher 1 die folgenden Sensoren auf:
Ein Trag- oder Lageteil 1.1 der Antriebswelle 7 und Tragoder Lageteile 1.2, wie ein Mulchergehäuse, des Arbeitsrotors 2 sind durch ein Gelenk 1.3 gelenkig miteinander verbunden. Mit horizontalem Abstand zum Gelenk 1.3 ist zwischen dem Teil 1.1 und 1.2 ein Kraftsensor 8.4 angeordnet, der ein Widerlager zwischen beiden Teilen 1.1, 1.2 bildet.

Weiter ist ein Grün-Sensor 8.8 zur Bestimmung des Grünungsgrads der zu mulchenden Biomasse vorgesehen, aufgrund dessen (Messung der Position der Schneidkante entsprechend des Zustandes der Biomasse), je nach dem ob sie feucht oder trocken ist, durch die Steuereinrichtung 11 eingestellt werden kann.

Der Antriebswelle 7 ist ein erster Drehzahlsensor 8.1 zur Bestimmung der Drehzahl n1 der Antriebswelle 7 zugeordnet.

Die Drehzahl n2 der Rotorwelle 2.1 und damit des Rotors 2 wird durch einen diesem zugeordneten zweiten Drehzahlsensor 8.2 bestimmt. Der Antriebswelle 7 ist ein Drehmomentsensor 8.3 zur Messung des auf die Antriebswelle 7 einwirkenden Drehmoments zugeordnet. Dabei kann der Drehzahlmesser 8.1 im Drehmomentsensor 8.3 integriert sein. Mittels des Drehmomentsensors 8.3 und des Drehzahlmessers 8.1 wird ein Istwert der mechanischen Eingangsleistung (P=Md^{∗}Ω) für den Zerkleinerungsprozess und damit der entsprechend dem elektrischen Leistungsbedarf (P=U^{∗}I) bestimmt. Dieser kann derart laufend überwacht werden und/oder als Führungsgröße zur Schneidspalteinstellung genutzt werden. Bei plötzlichem Leistungsanstieg durch Überlast des Arbeitsrotors, was sich auf die Antriebswelle 7 überträgt und damit durch den Drehmomentsensor 8.3 erfassbar ist, kann der Spalt zwischen Schneidkante 4.1.1 und Rotorschlegeln 2.2 vergrößert und damit eine Systementlastung bzw. Störungsbeseitigung bewirkt werden.

Der Abstand 8 zwischen Schneidkante 4.1.1 und dem nächsten Punkt der Maximalkontur des Umlaufwegs der Außenkanten der Rotorschlegel 2.2 ist als Schneidspalt S definiert.

Bei stark wechselndem Material kann eine Regelung dahingehend erfolgen, dass das Drehmoment, die Drehzahl und damit auch der Kraftstoffverbrauch konstant gehalten und insbesondere auch begrenzt werden. Durch die Begrenzung wird ermöglicht, dass kleinere Traktoren größere Mulcher bedienen können - unter Inkaufnahme des unterschiedlichen Mulchergebnisses.

Zur Bestimmung der Position α der Schneidschiene 4.1 und damit der Position der Schneidkante 4.1.1 ist ein Positionssensor 8.5 vorgesehen, der vorzugsweise als Drehpotentiometer oder als Lineargeber gegebenenfalls als Teil des Verstellgliedes selbst, ausgebildet ist.

Dem Zylinder sind beidseits einer Dichtplatte des Kolbens 4.3 Drucksensoren 8.6, 8.7 zur Bestimmung des Drucks P1, P2 in der jeweiligen Teilkammer des Zylinders 4.2 zugeordnet.

Der Kraftsensor 8.4 hat eine dem Drehmomentsensor 8.3 vergleichbare Funktion. Aufgrund seines Signals F in Verbindung mit einem Drehzahlsignal, insbesondere dem Drehzahlsignal n1 des Drehzahlsensors 8.1 ist bei dem gegebenen vom Rotor verarbeiteten Mulchgut der geforderte Leistungsbedarf ermittelbar, so dass die erfassten Sensorwerte des Sensors 8.4 in Verbindung mit dem Sensor 8.1 in gleicher Weise insbesondere zur Leistungsregelung und gegebenenfalls - begrenzung herangezogen werden können.

Die Versorgung und Steuerung des Hydraulikzylinders 4.2 erfolgt über ein 4/3-Wegeventil 9, das bei Arbeiten mit einem Hydraulikzylinder 4.2 aus einem Hydraulikölreservoir 10 über eine Pumpe 10.1 versorgt wird. Entsprechend der Steuerung über Steuereingangsleitung 9.1 und 9.2 werden dann die beiden Einlässe des Hydraulikzylinders über Hydraulikleitungen 9.3 und 9.4 in üblicher Weise beaufschlagt.

Die schematische Darstellung der Fig. 3 zeigt weiterhin einen Mikrocomputer 11 zur Regelung des Hydraulikzylinders 4.2 aufgrund der Eingangswerte der Sensoren 8.1 bis 8.7 sowie ein Bedienungsgerät 12 zur Steuerung des Mikrocomputers 11.

Die Sensoren 8.6-8.7 sind über Signalleitungen 8.6.1 bis 8.7.1 mit der Steuereinrichtung 11 verbunden. Die Steuereinrichtung 11 ist über Steuerleitungen 11.1, 11.2 mit dem 4/3-Wegeventil der Auslegung desselben verbunden.

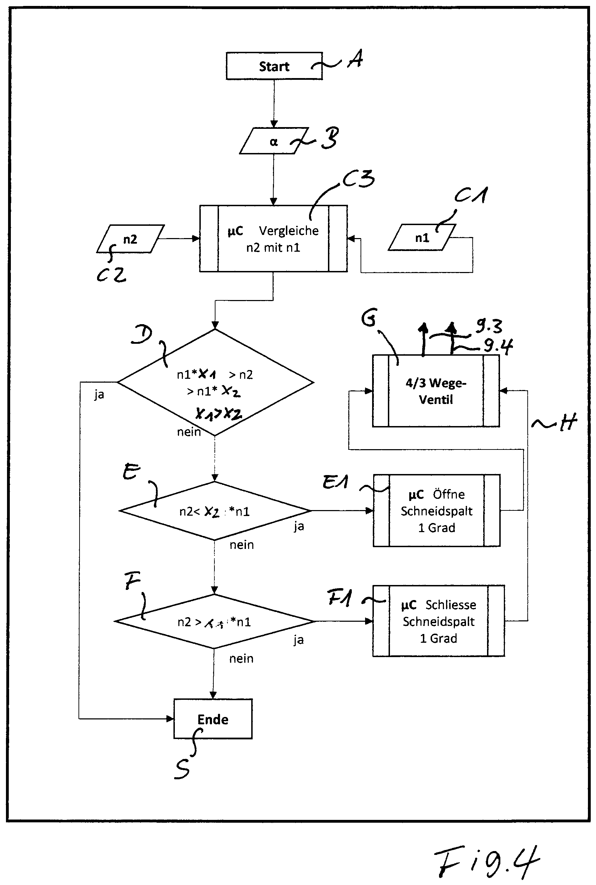

Der Ablauf des erfindungsgemäßen Verfahrens ist in der Fig. 4 dargestellt und geschieht wie folgt:
Nach Starten des Mulchers gemäß Schritt A wird zunächst im Schritt B die Position der Schneidschiene 4.1 und damit deren Schneidkante bestimmt. Im Weiteren, d.h. in den Schritten C1 und C2 erfolgt eine Bestimmung der Drehzahlen n1 und n2 sowie ein Vergleich desselben (Schritt C3) mittels des Mikrocomputers. Stimmen die Drehzahlen weitgehend - bis auf Toleranzen - überein, wobei die Toleranzen beispielsweise in der Größenordnung von 3% liegen können (Vergleich im Schritt D), so ist keine Handlung erforderlich und der Überwachungsschritt wird beendet (Schritt D) und dieser einzelne Überwachungsvorgang wird beendet (Schritt G). Ein solcher Überwachungsvorgang wird quasi-kontinuierlich in vorgegebenen Zeitabständen wiederholt, was durch die gestrichelte von Ende zum Stab führende Linie H angedeutet ist.

Stellt sich im Schritt D heraus, dass die Abweichung der Drehzahl n2 von der Drehzahl n1 größer als die vorgegebene Toleranz ist, so wird bei dem dargestellten Ausführungsbeispiel zunächst im folgenden Schritt E überprüft, ob die Drehzahl n2 kleiner als die Drehzahl n1 unter Berücksichtigung eines Toleranzwerts (Multiplikator x 2) ist. Ist dies der Fall, so erhält der Mikrocomputer ein entsprechendes Sensorsignal und steuert im Schritt E1 das 4/3-Wegeventil 9 dahingehend an, dass es den Schneidspalt zwischen Schneidkante 4.1.1 und äußerem Umfang des Rotors 2 der Schlegel 2.2 um einen vorgegebenen geringen Wert ändert, beispielsweise um einen Wert, der beispielsweise einer Verschwenkung des über einen Hebel 8.5.1 mit der Schneidschiene 4.1 bzw. dem Kolben 4.3 verbundenen Potentiometers 8.5 um 1° entspricht.

Wie gesagt, wird der Überprüfungsvorgang der Drehzahlen n1, n2 laufend bzw. quasi-kontinuierlich wiederholt. Die Ansteuerung erfolgt derart, dass das 4/3-Wegeventil 9 den Zylinder 4.2 über die Leitung 9.4 und den Einlass 4.2.2 des Zylinders mit Hydrauliköl beaufschlagt, so dass der Kolben 4.3 zurückgezogen wird.

Die Überwachung erfolgt, wie gesagt, laufend bzw. quasi-kontinuierlich. Ist bei der nächsten Überwachungsphase die Drehzahl n2 immer noch unter Berücksichtigung von Toleranzen kleiner als die Drehzahl n1, so erfolgt in der beschriebenen Weise eine weitere Öffnung des Ventils, bis bei der Überprüfung im Schritt D festgestellt wird, dass die Drehzahl n2 unter dem dort gegebenen Toleranzbereich mit der Drehzahl n1 übereinstimmt.

Ergibt sich im Schritt E, dass die Drehzahl n2 unter Berücksichtigung der Toleranz nicht unterhalb des Drehzahlwerts n1 liegt, so wird im nächsten Schritt F überprüft, ob sie unter Berücksichtigung der Toleranz oberhalb der Drehzahl n1 liegt. Ist dies der Fall, so erfolgt in der unter Bezug auf den Schritt E1 beschriebenen Weise im Schritt F1 ein Schließen des Schneidspaltes zwischen Schneidkante 4.1.1 und Rotorschlegel 4.2 um 1°, wobei dieser Schließvorgang gegebenenfalls bei den weiteren quasi-kontinuierlich aufeinanderfolgenden Überwachungsphasen wiederholt wird, bis die Drehzahlen n1 und n2 unter Berücksichtigung der Toleranzen übereinstimmen und damit die gewünschten Verhältnisse erzielt sind.

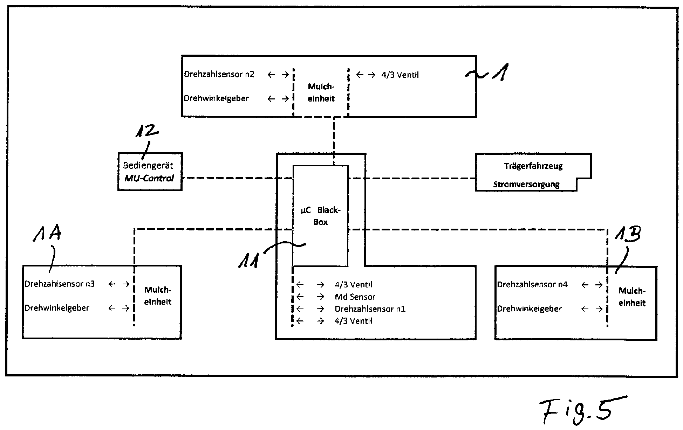

Die schematische Darstellung der Fig. 5 veranschaulicht, dass an einem Fahrgerät (Schlepper) mit der geeigneten Steuerung 11 mehrere, hier drei, Mulcher 1 angeordnet bzw. verbunden werden können und zwar ein Frontmulcher 1 sowie rechts und links zwei seitliche Mulcher 1A und 1B, wodurch die Arbeits- bzw. Mulchbreite vergrößert werden kann. Grundsätzlich können auch drei Mulcher in Schubanordnung vorgesehen sein.

## Patentansprüche

1. Landwirtschaftliche Arbeitsvorrichtung zum Bearbeiten von Biomasse, wie Pflanzenteilen, insbesondere Mulch-, Mulch-Mäh- oder Fräsvorrichtung, mit einem von einer Antriebswelle (7) angetriebenen Arbeitsrotor (2) mit einer Rotorwelle (2.1) und mit einer Schneidschiene (4.1) mit einer auf den Arbeitsrotor (2) zu richtbaren Schneidkante (4.1.1), mit Sensoren (8.1 - 8.7) zur Erfassung von Parametern von Arbeitsrotor (2) und/oder Schneidschiene (4.1), einer elektronischen Steuereinrichtung (11) und mindestens einem Stellglied (9) zur Einstellung der Schneidschiene (4.1), **gekennzeichnet durch** Drehzahlsensoren (8.1, 8.2) zur Bestimmung der Drehzahlen (n1, n2) von Antriebswelle (7) und Rotorwelle (2.1) des Arbeitsrotors (2) und durch Ausgestaltung der Steuereinrichtung (11) zur Einstellung der Position der Schneidkante (4.1.1) derart, dass das Verhältnis der Drehzahlen (n1, n2) unter Berücksichtigung und Toleranzen in einem vorgegebenen Bereich liegt.

2. Vorrichtung nach Anspruch 1, **gekennzeichnet durch** einen Positionssensor(8.5) zur Bestimmung der Position der Schneidschiene (4.1) und/oder der Schneidkante (4.1.1).

3. Vorrichtung nach einem der vorangehenden Ansprüche, **gekennzeichnet durch** einen Drehmomentsensor (8.3) zur Bestimmung des an einer der Wellen (7, 2.1) angreifenden Drehmoments und Auslegung der Steuereinrichtung (11) zur Einstellung der Position der Schneidkante (4.1.1) zur Vermeidung einer Überlast.

4. Vorrichtung nach einem der vorangehenden Ansprüche, **gekennzeichnet durch** einen Kraftsensor (8.4) zwischen gelenkig miteinander verbundenen Tragteilen (1.1, 1.2) von Antriebswelle (7) und Rotor (3) zur Bestimmung des Leistungsbedarfs des Mulchers in Verbindung mit dem Signal eines der Drehzahlsensoren (8.1, 8.2) und durch Auslegung der Steuereinrichtung (11) zur Einstellung der Position der Schneidkante (4.1.1) zur Vermeidung einer Überlast.

5. Vorrichtung nach einem der vorangehenden Ansprüche, **gekennzeichnet durch** Drucksensoren (8.6, 8.7) zur Messung der Drücke in einem die Schneidschiene (4.1) bewegenden Zylinder (4.2) beidseits einer Kolbenfläche des Kolbens (4.3) des Zylinders (4.2) und durch Verbindung der Drucksensoren (8.6, 8.7) über Signalleitungen (8.6.1, 8.7.1) mit der Steuereinrichtung (11).

6. Vorrichtung nach Anspruch 5, **dadurch gekennzeichnet dass** das Stellglied (9), insbesondere ein Vier-Drei-Wege-Ventil, durch das die elektronische Steuereinrichtung (11) angesteuert ist zur Beaufschlagung eines Zylinders (2) zur Einstellung der Position der Schneidschiene (4.1) ausgebildet ist.

7. Vorrichtung nach einem der vorangehenden Ansprüche, **gekennzeichnet durch** ein mit der Steuereinrichtung (11) bidirektional verbundenes Bediengerät (12) zur Bedienung der Steuereinrichtung (11) und Anzeige der durch diese geregelten Parameter.

8. Vorrichtung nach einem der vorangehenden Ansprüche, **gekennzeichnet durch** einen Grün-Sensor zur Bestimmung des Grünungsgrads und/oder Masse der zu mulchenden Biomasse und durch Auslegung der Steuereinrichtung (11) zur Einstellung der Position der Schneidkante (4.1) in Abhängigkeit des Grünungsgrads der Biomasse.

9. Verfahren zum Einstellen der Position einer Schneidschiene (4.1) einer landwirtschaftlichen Arbeitsvorrichtung, wie eines Mulchers (1), relativ zu einem Arbeitsrotor (2) der Arbeitsvorrichtung (1), **dadurch gekennzeichnet, dass** die Drehzahl (n1) einer Antriebswelle (7) und die Drehzahl (n2) einer Rotorwelle (2.1) des Arbeitsrotors (2) gemessen und miteinander verglichen werden und bei Abweichung des Verhältnisses der Drehzahlen (n1, n2) über eine vorgegebene Schwelle die Position der Schneidschiene (4.1) verändert wird.

10. Verfahren nach Anspruch 9, **dadurch gekennzeichnet, dass** bei Unterschreiten des Verhältnisses der Drehzahl (n2) des Arbeitsrotors (2) zur Drehzahl (n1) der Antriebswelle (7) gegenüber einem vorgegebenen Wert der Schneidspalt (S) um einen vorgegebenen Wert vergrößert wird.

11. Verfahren nach Anspruch 9 oder 10, **dadurch gekennzeichnet, dass** beim Überschreiten des Verhältnisses der Drehzahlen (n2) des Arbeitsrotors (2) und (n1) der Antriebswelle (7) über einen vorgegebenen Wert der Schneidspalt (S) um einen vorgegebenen Wert reduziert wird.

12. Verfahren nach Anspruch 9 bis 11, **dadurch gekennzeichnet, dass** die Überprüfung des Schneidspaltes (S) quasi-kontinuierlich vorgenommen wird und bei jeder Überprüfungsphase der Schritt entweder nach Anspruch 10 oder nach Anspruch 11 durchgeführt wird.

13. Verfahren nach einem der Ansprüche 9 bis 12, **dadurch gekennzeichnet, dass** das Drehmoment an mindestens einer der Wellen (7, 2.1) gemessen und die Position der Schneidkante zur Begrenzung des Drehmoments und/oder zur Vermeidung einer Überlast eingestellt wird.

14. Verfahren nach einem der Ansprüche 9 bis 12, **dadurch gekennzeichnet, dass** die Drehzahlen (n1, n2) der durch eine Getriebeverbindung zwischen ihnen beweglich zueinander gelagerten Wellen (7, 2.1) gemessen und in Verbindung mit der Messung einer der Drehzahlen (n1, n2) der Wellen (7, 2.1) die Position der Schneidkante (4.1) zur Vermeidung einer Überlast geregelt wird.

15. Verfahren nach einem der Ansprüche 9 bis 14, **dadurch gekennzeichnet, dass** der Grünungsgrad zu mulchender Biomasse gemessen und die Position der Schneidkante (4.1) aufgrund dieser Messung eingestellt wird.

16. Landwirtschaftliches System zum Bearbeiten von Biomasse, wie Pflanzenteilen, mit einem Zug-, Träger- oder Antriebsfahrzeug oder selbstfahrend sowie mit mehr als einer an diesem angebrachten Vorrichtung nach einem der Ansprüche 1 bis 8 mit einer gemeinsamen Steuereinrichtung.

## Claims

1. Agricultural working device for processing biomass, such as parts of plants, in particular a mulching device, mulching-mowing device or milling device, having a working rotor (2) which is driven by a drive shaft (7) and has a rotor shaft (2.1) and a cutting rail (4.1) with a cutting edge (4.1.1) which can be directed towards the working rotor (2), having sensors (8.1 - 8.7) for acquiring parameters of working rotor (2) and/or cutting rail (4.1), an electronic control apparatus (11) and at least one actuator element (9) for setting the cutting rail (4.1), wherein the sensors comprise, in particular, rotational speed sensors (8.1, 8.2) for determining the rotational speeds (n1, n2) of drive shaft (7) and rotor shaft (2.1) of the working rotor (2), and the control apparatus (11), to set the position of the cutting edge (4.1.1), is designed in such a way that the ratio of the rotational speeds (n1, n2) is in a predefined range, taking into account tolerances.

2. Device according to Claim 1, **characterized by** a position sensor (8.5) for determining the position of the cutting rail (4.1) and/or of the cutting edge (4.1.1).

3. Device according to one of the preceding claims, **characterized by** a torque sensor (8.3) for determining the torque acting on one of the shafts (7, 2.1) and configuring the control apparatus (11) to set the position of the cutting edge (4.1.1) in order to avoid an overload.

4. Device according to one of the preceding claims, **characterized by** a force sensor (8.4) in between supporting parts (1.1, 1.2) which are connected to one another in an articulated fashion, of drive shaft (7) and rotor (3) for determining the power demand of the mulcher in conjunction with the signal of one of the rotational speed sensors (8.1, 8.2), and by configuration of the control apparatus (11) to set the position of the cutting edge (4.1.1) in order to avoid an overload.

5. Device according to one of the preceding claims, **characterized by** pressure sensors (8.6, 8.7) for measuring the pressures in a cylinder (4.2) which moves the cutting rail (4.1) on both sides of a piston face of the piston (4.3) of the cylinder (4.2), and by connection of the pressure sensors (8.6, 8.7) to the control apparatus (11) via signal lines (8.6.1, 8.7.1).

6. Device according to Claim 5, **characterized in that** the actuator element (9), in particular a four-three-way valve, by which the electronic control apparatus (11) is actuated is designed to act on a cylinder (2) in order to set the position of the cutting rail (4.1).

7. Device according to one of the preceding claims, **characterized by** an operator control unit (12) which is connected bidirectionally to the control apparatus (11) and has the purpose of operating the control apparatus (11) and displaying the parameters which are controlled thereby.

8. Device according to one of the preceding claims, **characterized by** a green sensor for determining the degree of greening and/or mass of the biomass to be mulched and by configuration of the control apparatus (11) to set the position of the cutting edge (4.1) as a function of the degree of greening of the biomass.

9. Method for setting the position of a cutting rail (4.1) of an agricultural working device, such as a mulcher (1), relative to a working rotor (2) of the working device (1), **characterized in that** the rotational speed (n1) of a drive shaft (7) and the rotational speed (n2) of a rotor shaft (2.1) of the working rotor (2) are measured and compared with one another and when the ratio of the rotational speeds (n1, n2) differs beyond a predefined threshold the position of the cutting rail (4.1) is changed.

10. Method according to Claim 9, **characterized in that** when the ratio of the rotational speed (n2) of the working rotor (2) with respect to the rotational speed (n1) of the drive shaft (7) is undershot with respect to a predefined value the cutting gap (S) is increased by a predefined value.

11. Method according to Claim 9 or 10, **characterized in that** when the ratio of the rotational speeds (n2) of the working rotor (2) and (n1) of the drive shaft (7) is exceeded beyond a predefined value the cutting gap (S) is reduced by a predefined value.

12. Method according to Claim 9 to 11, **characterized in that** the checking of the cutting gap (S) is performed quasi-continuously, and at each checking phase the step is carried out either according to Claim 10 or according to Claim 11.

13. Method according to one of Claims 9 to 12, **characterized in that** the torque at at least one of the shafts (7, 2.1) is measured, and the position of the cutting edge is set in order to limit the torque and/or to avoid an overload.

14. Method according to one of Claims 9 to 12, **characterized in that** the rotational speed (n1, n2) of the shafts (7, 2.1) is measured which are mounted movably with respect to one another by means of a gear mechanism connection, and the position of the cutting edge (4.1) is controlled in order to avoid an overload in conjunction with the measurement of one of the rotational speeds (n1, n2) of the shafts (7, 2.1).

15. Method according to one of Claims 9 to 14, **characterized in that** the degree of greening of biomass to be mulched is measured, and the position of the cutting edge (4.1) is set on the basis of this measurement.

16. Agricultural system for processing biomass, such as parts of plants, having a tractor vehicle, carrier vehicle or drive vehicle or self-propelling as well as more than one device attached thereto according to one of Claims 1 to 8 with a common control apparatus.

## Revendications

1. Dispositif de travail agricole pour traiter de la biomasse, par exemple des parties de plante, notamment dispositif de paillage, de fauchage-paillage ou de fraisage, avec un rotor de travail (2) entraîné par un arbre d'entraînement (7) équipé d'un arbre de rotor (2.1) et d'un rail tranchant (4.1) avec une arête tranchante (4.1.1) pouvant être réglée sur le rotor de travail (2), avec des capteurs (8.1 - 8.7) permettant de détecter les paramètres du rotor de travail (2) et/ou du rail tranchant (4.1), avec un dispositif de commande électronique (11) et au moins un élément de réglage (9) permettant de régler le rail tranchant (4.1), **caractérisé par** la présence de capteurs de vitesse de rotation (8.1, 8.2) permettant de déterminer les vitesses de rotation (n1, n2) de l'arbre d'entraînement (7) et de l'arbre de rotor (2.1) du rotor de travail (2) et, par configuration du dispositif de commande (11), de régler la position de l'arête tranchante (4.1.1) de telle sorte qu'une fois les tolérances prises en compte, le rapport des vitesses de rotation (n1, n2) se situe dans une plage prédéfinie.

2. Dispositif selon la revendication 1, **caractérisé par** la présence d'un capteur de position (8.5) permettant de déterminer la position du rail tranchant (4.1) et/ou de l'arête tranchante (4.1.1).

3. Dispositif selon l'une quelconque des revendications précédentes, **caractérisé par** la présence d'un capteur de couple de rotation (8.3) permettant de déterminer le couple de rotation au niveau d'un des arbres (7, 2.1) et, par configuration du dispositif de commande (11), de régler la position de l'arête tranchante (4.1.1) en vue d'éviter une surcharge.

4. Dispositif selon l'une quelconque des revendications précédentes, **caractérisé par** la présence d'un capteur d'effort (8.4) entre les parties portantes (1.1, 1.2) reliées entre elles de façon articulée de l'arbre d'entraînement (7) et du rotor (3), permettant de déterminer le besoin de puissance de la pailleuse en lien avec le signal d'un des capteurs de vitesse de rotation (8.1, 8.2) et, par configuration du dispositif de commande (11), de régler la position de l'arête tranchante (4.1.1) en vue d'éviter une surcharge.

5. Dispositif selon l'une quelconque des revendications précédentes, **caractérisé par** la présence de capteurs de pression (8.6, 8.7) permettant de mesurer les pressions dans un cylindre (4.2) déplaçant le rail tranchant (4.1) des deux côtés d'une surface de piston du piston (4.3) du cylindre (4.2) ainsi qu'avec le dispositif de commande (11), par liaison des capteurs de pression (8.6, 8.7) via des câbles de transmission de signal (8.6.1, 8.7.1).

6. Dispositif selon la revendication 5, **caractérisé en ce que** l'élément de réglage (9), notamment une soupape à quatre-trois voies, à travers lequel le dispositif de commande électronique (11) est commandé, est réalisé de façon à alimenter un cylindre (2) permettant de régler la position du rail tranchant (4.1).

7. Dispositif selon l'une quelconque des revendications précédentes, **caractérisé par** la présence d'une console (12) reliée dans les deux directions au dispositif de commande (11) pour manier le dispositif de commande (11) et afficher les paramètres réglés par celui-ci.

8. Dispositif selon l'une quelconque des revendications précédentes, **caractérisé par** un capteur de degré de verdure permettant de déterminer le degré de verdure et/ou la masse de la biomasse à pailler et, par configuration du dispositif de commande (11), de régler la position de l'arête tranchante (4.1) en fonction du degré de verdure de la biomasse.

9. Procédé de réglage de la position d'un rail tranchant (4.1) d'un dispositif de travail agricole, par exemple d'une pailleuse (1), par rapport à un rotor de travail (2) du dispositif de travail (1), **caractérisé en ce que** la vitesse de rotation (n1) d'un arbre d'entraînement (7) et la vitesse de rotation (n2) d'un arbre de rotor (2.1) du rotor de travail (2) sont mesurées et comparées entre elles et qu'en cas d'écart du rapport des vitesses de rotation (n1, n2) au-delà d'un seuil prédéfini, la position du rail tranchant (4.1) est modifiée.

10. Procédé selon la revendication 9, **caractérisé en ce qu'**en cas de passage en dessous du rapport de la vitesse de rotation (n2) du rotor de travail (2) par rapport à la vitesse de rotation (n1) de l'arbre d'entraînement (7), par rapport à une valeur prédéfinie, l'interstice de tranchage (S) est augmenté d'une valeur prédéfinie.

11. Procédé selon la revendication 9 ou 10, **caractérisé en ce qu'**en cas de dépassement du rapport des vitesses de rotation (n2) du rotor de travail (2) et (n1) de l'arbre d'entraînement (7) au-delà d'une valeur prédéfinie, l'interstice de tranchage (S) est réduit d'une valeur prédéfinie.

12. Procédé selon la revendication 9 à 11, **caractérisé en ce que** le contrôle de l'interstice de tranchage (S) est effectué quasiment en continu et qu'à chaque phase de contrôle, l'étape soit selon la revendication 10 soit selon la revendication 11 est réalisée.

13. Procédé selon l'une quelconque des revendications 9 à 12, **caractérisé en ce que** le couple de rotation est mesuré au niveau d'au moins un des arbres (7, 2.1) et que la position de l'arête tranchante est réglée de façon à limiter le couple de rotation et/ou à éviter une surcharge.

14. Procédé selon l'une quelconque des revendications 9 à 12, **caractérisé en ce que** les vitesses de rotation (n1, n2) des arbres (7, 2.1) disposés de façon mobile l'un par rapport à l'autre par l'intermédiaire d'une liaison de transmission sont mesurées et que la position de l'arête tranchante (4.1) est réglée de façon à éviter une surcharge, sur la base de la mesure d'une des vitesses de rotation (n1, n2) des arbres (7, 2.1).

15. Procédé selon l'une quelconque des revendications 9 à 14, **caractérisé en ce que** le degré de verdure de la biomasse à pailler est mesuré et que la position de l'arête tranchante (4.1) est réglée sur la base de cette mesure.

16. Système agricole pour traiter de la biomasse, par exemple des parties de plante, avec un véhicule tracteur, porteur, moteur ou autonome ainsi qu'avec plus d'un dispositif, placé au niveau de celui-ci, selon l'une quelconque des revendications 1 à 8, dotés d'un dispositif de commande commun.
